# EUROPEAN PATENT APPLICATION

(11) **EP 4 763 758 A1**
(43) Date of publication of application: **24.06.2026**
(21) Application number: 25854474.1
(22) Date of filing: 10.06.2025
(51) Int. Cl.: B65G 47/26, H01M 50/531, H01M 50/213

(54) **CURRENT COLLECTOR PLATE ALIGNMENT DEVICE AND BATTERY CELL PRODUCED USING SAME, AND BATTERY PACK AND VEHICLE COMPRISING BATTERY CELL**

(30) Priority: 14.08.2024 KR 20240108762
(71) Applicant: LG Energy Solution, Ltd., Seoul 07335 (KR)
(72) Inventor: PARK, Jae-Seok, Daejeon 34122 (KR); KIM, Tae-Heon, Daejeon 34122 (KR); SHIM, Kyu-Hun, Daejeon 34122 (KR)
(74) Representative: Goddar, Heinz J.
(86) International application number: PCT/KR2025/007882
(87) International publication number: WO 2026/038661

(57) **Abstract**

Disclosed are a current collector plate alignment apparatus and a battery cell produced using the same, and a battery pack and a vehicle including the battery cell. A current collector plate alignment apparatus according to an embodiment of the present disclosure is an apparatus for aligning a current collector plate provided in a battery cell, and includes a seating member on which the current collector plate is seated; an alignment member that moves toward the current collector plate to align the current collector plate; and an operating member that operates the seating member and the alignment member.

## Description

### TECHNICAL FIELD

This application is based on and claims priority from Korean Patent Application No. 10-2024-0108762, filed on August 14, 2024, with the Korean Intellectual Property Office, the disclosure of which is incorporated herein in its entirety by reference.

The present disclosure relates to a current collector plate alignment apparatus and a battery cell produced using the same, and a battery pack and a vehicle including the battery cell, and more specifically, to a current collector plate alignment apparatus capable of aligning current collector plates and a battery cell produced using the same, and a battery pack and a vehicle including the battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. Additionally, depending on the demanded charging and discharging capacity, a plurality of battery cells may also be connected in parallel to configure a battery module or a battery pack. Therefore, the number and electrical connection type of battery cells included in the battery module or the battery pack may be variously set depending on at least one of the required output voltage and the demanded charging and discharging capacity.

As types of secondary battery cells, cylindrical, prismatic, and pouch-type battery cells are known. In the case of cylindrical battery cells, an insulating separator is interposed between a positive electrode plate and a negative electrode plate, which are wound to form a jelly-roll type electrode assembly, and this electrode assembly is inserted into a battery can together with an electrolyte to configure a battery. And, a current collector plate may be used to electrically connect each of the positive electrode plate and the negative electrode plate in cylindrical battery cells.

When manufacturing a battery cell, the current collector plates may be transferred after being seated on a transfer carrier from a tray where they are stored. At this time, when a plurality of current collector plates are loaded in multiple layers on the tray, the clearance in the tray may cause the plurality of current collector plates to be loaded to face different directions.

If the current collector plates are seated on the transfer carrier in this state (where a plurality of current collector plates are loaded to face different directions), the current collector plates may not be accurately seated on the transfer carrier, which results in a problem of adversely affecting the product quality of the battery cell.

### DISCLOSURE

### Technical Problem

The present disclosure is designed to solve the above-described problems, and therefore the present disclosure is directed to providing a current collector plate alignment apparatus capable of accurately seating current collector plates on a transfer carrier and a battery cell produced using the same, and a battery pack and a vehicle including the battery cell.

Additionally, the present disclosure is directed to providing a current collector plate alignment apparatus capable of automating the transfer of current collector plates from a tray to the transfer carrier and a battery cell produced using the same, and a battery pack and a vehicle including the battery cell.

Additionally, the present disclosure is directed to providing a current collector plate alignment apparatus capable of preventing damage to the current collector plates and a battery cell produced using the same, and a battery pack and a vehicle including the battery cell.

Additionally, the present disclosure is directed to providing a current collector plate alignment apparatus capable of improving the product quality of battery cells and a battery cell produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a current collector plate alignment apparatus, which is an apparatus for aligning a current collector plate provided in a battery cell, including a seating member on which the current collector plate is seated; an alignment member that moves toward the current collector plate to align the current collector plate; and an operating member that operates the seating member and the alignment member.

In an embodiment, the current collector plate may include a main body with a central hole formed therein, and the seating member may include a support portion that supports the main body; and an insertion portion that is coupled to the support portion and into which the central hole of the main body is inserted.

In an embodiment, the support portion may include a support that supports the current collector plate; and a circumferential protrusion that protrudes from a circumference of the support.

In an embodiment, the insertion portion may include a first portion extending from the support portion; and a second portion extending obliquely upward from the first portion.

In an embodiment, the alignment member may include a pair of alignment guides disposed at each of both sides of the seating member.

In an embodiment, the current collector plate alignment apparatus may include a driving unit that is coupled to the pair of alignment guides and moves the pair of alignment guides toward the current collector plate side.

In an embodiment, the pair of alignment guides may align the current collector plate by pressing the current collector plate from both sides of the current collector plate.

In an embodiment, the current collector plate alignment apparatus may include a linear movement guide coupled to the pair of alignment guides to allow the pair of alignment guides to move linearly toward the current collector plate.

In an embodiment, the operating member may operate the seating member and the alignment member to move the current collector plate aligned with the alignment member to a transfer carrier.

In an embodiment, the operating member may include a rotation unit coupled to the alignment member to rotate the alignment member; and a power unit coupled to the rotation unit to rotate the rotation unit.

In an embodiment, the transfer carrier may be positioned below the alignment member, and the operating member may rotate the alignment member to allow the alignment member to be positioned to correspond to the transfer carrier.

In an embodiment, the alignment member may include a pair of alignment guides disposed at each of both sides of the seating member to press each of both sides of the current collector plate, and when the alignment member is positioned to correspond to the transfer carrier, the pair of alignment guides may release the pressure on the current collector plate, thereby allowing the current collector plate to descend onto the transfer carrier.

In an embodiment, an alignment hole may be formed in the current collector plate, and an alignment protrusion may be formed in the transfer carrier, and as the current collector plate descends, the alignment hole of the current collector plate may be inserted into the alignment protrusion of the transfer carrier.

In an embodiment, the current collector plate alignment apparatus may include a detection sensor installed on the seating member to detect the seating of the current collector plate.

Meanwhile, according to another aspect of the present disclosure, there may be provided a battery cell produced using the current collector plate alignment apparatus described above, there may also be provided a battery pack including at least one battery cell described above, and there may also be provided a vehicle including at least one battery cell described above.

### Advantageous Effects

The embodiments of the present disclosure have an effect of accurately seating current collector plates on a transfer carrier.

Additionally, there is an effect of automating the transfer of current collector plates from a tray to the transfer carrier.

Additionally, there is an effect of preventing damage to the current collector plates.

Additionally, there is an effect of improving the product quality of battery cells.

However, the effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is schematic perspective view of a current collector plate alignment apparatus according to an embodiment of the present disclosure.
FIG. 2 is a perspective view illustrating a state in which a current collector plate is seated on a seating member in a current collector plate alignment apparatus according to an embodiment of the present disclosure.
FIG. 3 is a perspective view illustrating a state before alignment members align a current collector plate in a current collector plate alignment apparatus according to an embodiment of the present disclosure.
FIG. 4 is a view taken along part A of FIG. 3.
FIG. 5 is a perspective view illustrating a state after alignment members align a current collector plate in a current collector plate alignment apparatus according to an embodiment of the present disclosure.
FIG. 6 is a view taken along part B of FIG. 5.
FIG. 7 is an enlarged view of a seating member in a current collector plate alignment apparatus according to an embodiment of the present disclosure.
FIG. 8 is a view illustrating an operating member in a current collector plate alignment apparatus according to an embodiment of the present disclosure.
FIG. 9 is an enlarged view of part C of FIG. 8.
FIG. 10 is a view illustrating a seating member on which a current collector plate is seated and a transfer carrier in a current collector plate alignment apparatus according to an embodiment of the present disclosure, and the alignment member on one side is omitted.
FIGS. 11 to 14 are views illustrating a process of moving a current collector plate to a transfer carrier after the current collector plate is aligned by a current collector plate alignment apparatus according to an embodiment of the present disclosure.
FIG. 15 is a plan view showing a current collector plate after being moved to a transfer carrier by a current collector plate alignment apparatus according to an embodiment of the present disclosure.
FIG. 16 is a view schematically showing the configuration of a battery pack including battery cells produced using a current collector plate alignment apparatus according to each embodiment of the present disclosure.
FIG. 17 is a view for describing a vehicle including a battery pack of FIG. 16.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

In the present disclosure, the following embodiments may each be implemented independently. Furthermore, the present disclosure may be implemented by combining two or more of the following embodiments. Each of the following embodiments may be implemented independently and may also be freely combined with one another.

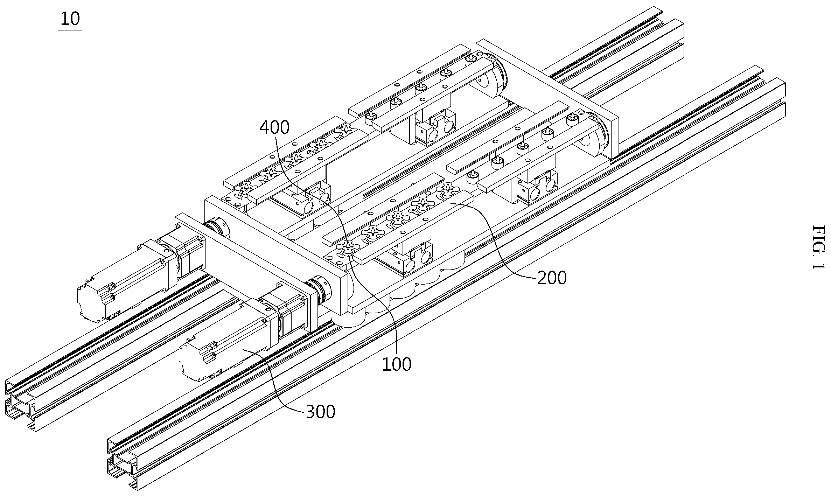

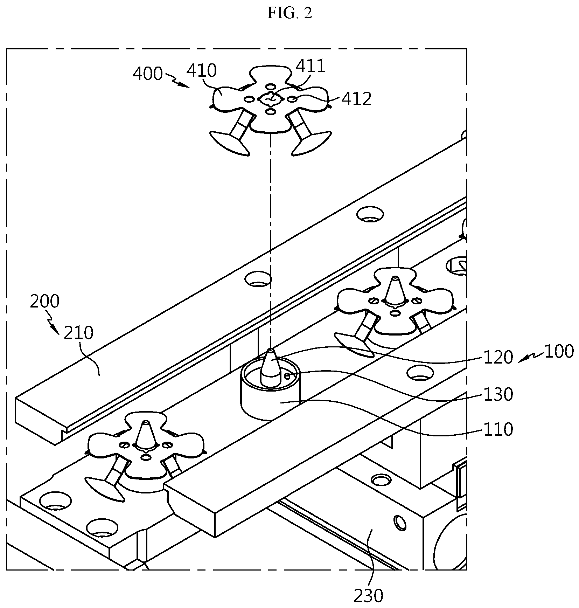

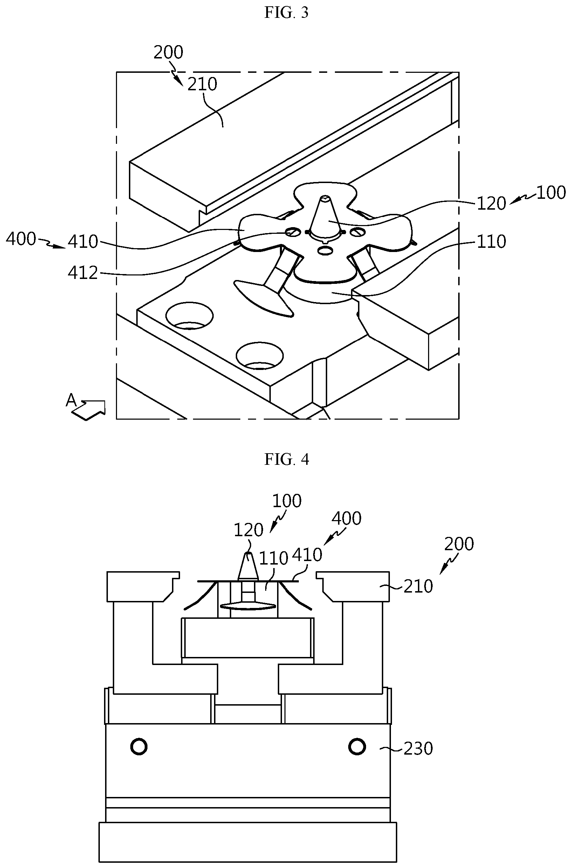

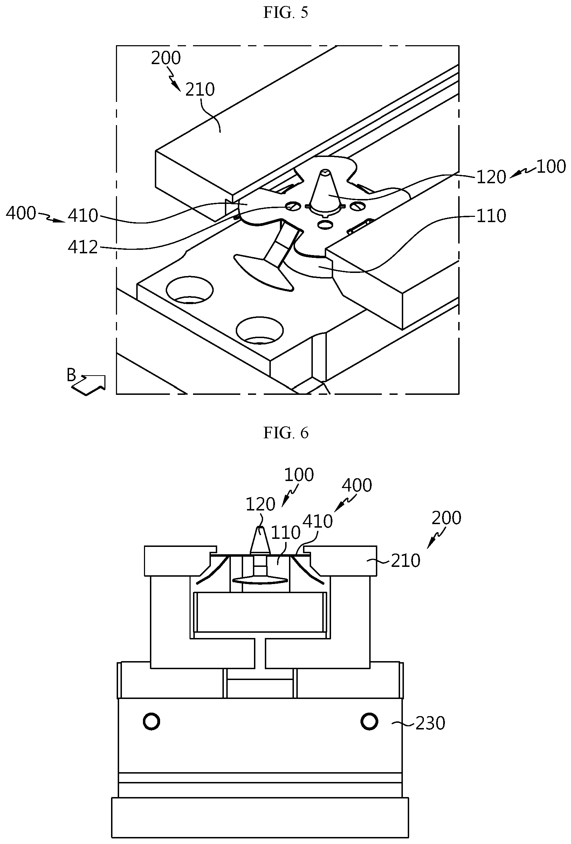

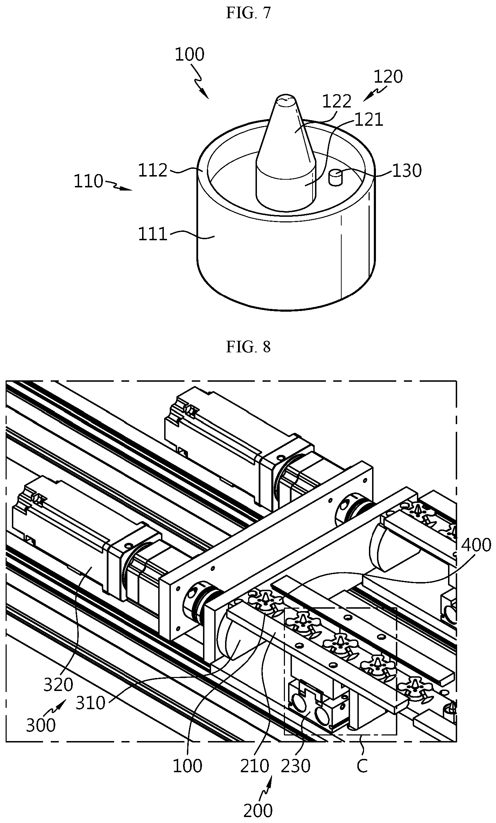

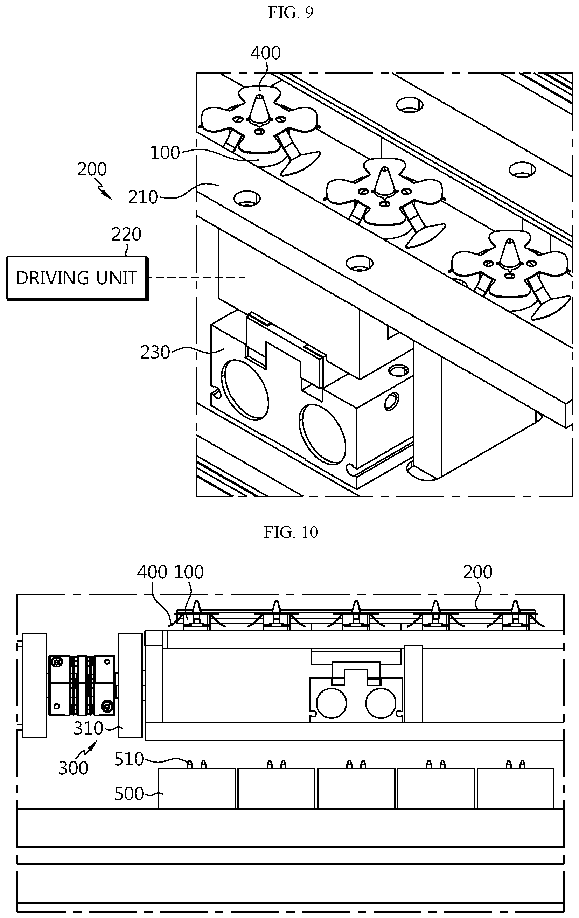

FIG. 1 is schematic perspective view of a current collector plate alignment apparatus according to an embodiment of the present disclosure, FIG. 2 is a perspective view illustrating a state in which a current collector plate is seated on a seating member in a current collector plate alignment apparatus according to an embodiment of the present disclosure, FIG. 3 is a perspective view illustrating a state before alignment members align a current collector plate in a current collector plate alignment apparatus according to an embodiment of the present disclosure, FIG. 4 is a view taken along part A of FIG. 3, FIG. 5 is a perspective view illustrating a state after alignment members align a current collector plate in a current collector plate alignment apparatus according to an embodiment of the present disclosure, FIG. 6 is a view taken along part B of FIG. 5, FIG. 7 is an enlarged view of a seating member in a current collector plate alignment apparatus according to an embodiment of the present disclosure, FIG. 8 is a view illustrating an operating member in a current collector plate alignment apparatus according to an embodiment of the present disclosure, FIG. 9 is an enlarged view of part C of FIG. 8, and FIG. 10 is a view illustrating a seating member on which a current collector plate is seated and a transfer carrier in a current collector plate alignment apparatus according to an embodiment of the present disclosure, and the alignment member on one side is omitted.

A current collector plate alignment apparatus 10 according to an embodiment of the present disclosure is an apparatus for aligning a current collector plate 400 provided in a battery cell 20 during the manufacturing process of the battery cell 20. The current collector plate 400 may be either a positive electrode current collector plate or a negative electrode current collector plate.

More specifically, when manufacturing the battery cell 20, the current collector plates 400 are transferred from the tray where the current collector plates 400 are stored to the current collector plate alignment apparatus 10 according to an embodiment of the present disclosure by various methods. Then, the current collector plates 400 are aligned in the current collector plate alignment apparatus 10.

And, the current collector plates 400 aligned by the current collector plate alignment apparatus 10 are transferred to a transfer carrier 500. Then, the transfer carrier 500 transfers the current collector plates 400 to the manufacturing apparatus of the battery cell 20 to manufacture the battery cell 20.

Here, as one embodiment, a battery cell 20 manufactured using the current collector plate 400 aligned by the current collector plate alignment apparatus 10 according to an embodiment of the present disclosure may be directly accommodated in a pack housing 31 of a battery pack 30. Hereinafter, even when simply referred to as a "battery cell 20", it should be understood as meaning a battery cell 20 manufactured using the current collector plate 400 aligned by the current collector plate alignment apparatus 10 according to an embodiment of the present disclosure.

Alternatively, although not illustrated in the drawings, as another embodiment, the battery cell 20 may be accommodated in a module case of a battery module, and the module case accommodating the battery cell 20 may be accommodated in a pack housing 31 to configure a battery pack 30.

The types of the battery cell 20 may vary. For example, the battery cell 20 may include at least one of a pouch-type battery cell, a cylindrical battery cell, and a prismatic battery cell within a possible range. However, the following description will focus on the case where the battery cell 20 is a cylindrical battery cell for convenience of description.

The battery cell 20 (e.g., a cylindrical battery cell) may include an electrode assembly, a battery can, and a cap plate.

The electrode assembly has a structure in which a positive electrode plate, a negative electrode plate, and a separator interposed between the positive electrode plate and the negative electrode plate are wound in one direction. And, a central hole is formed in the center of the electrode assembly, and the electrode assembly may be formed in a jelly roll type.

For example, the electrode assembly may be manufactured by winding a laminate formed by sequentially laminating a negative electrode plate, a separator, a positive electrode plate, and a separator at least once. Here, the positive electrode plate and the negative electrode plate may be formed in a sheet shape.

That is, the electrode assembly applied to the present embodiment may be a winding type electrode assembly. In this case, an additional separator may be provided on the outer circumferential surface of the electrode assembly for insulation from the battery can. That is, the electrode assembly may have any winding structure well known in the related art without limitation.

A positive electrode active material may be applied to one or both surfaces of the positive electrode plate, and a first uncoated portion to which the positive electrode active material is not applied may be formed at an end of the positive electrode plate. The first uncoated portion is exposed to the outside of the separator while forming a plurality of winding turns around the center of the electrode assembly, and may itself be used as an electrode tab. However, the first uncoated portion may not be formed on the positive electrode plate.

A negative electrode active material may be applied to one or both surfaces of the negative electrode plate, and a second uncoated portion to which the negative electrode active material is not applied may be formed at an end of the negative electrode plate. The second uncoated portion is exposed to the outside of the separator while forming a plurality of winding turns around the center of the electrode assembly, and may itself be used as an electrode tab. However, the second uncoated portion may not be formed on the negative electrode plate.

Here, when the positive electrode plate and the negative electrode plate each include an uncoated portion, the first uncoated portion and the second uncoated portion may be configured to face opposite directions.

And, the positive electrode active material coated on the positive electrode plate and the negative electrode active material coated on the negative electrode plate may be used without limitation so long as they are active materials known in the art.

The separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. Additionally, the separator itself may be formed of a coating layer of inorganic particles. The particles constituting the coating layer may have a structure coupled to a binder so that an interstitial volume exists between adjacent particles.

And, the central hole of the electrode assembly is also used for welding the cell terminal (positive electrode terminal) and the positive electrode current collector plate. That is, it may be configured to weld the cell terminal and the positive electrode current collector plate by irradiating a laser through the central hole of the electrode assembly.

The electrode assembly is accommodated in the battery can. And, a through hole may be formed in the battery can. Here, the battery can is formed in a cylindrical shape, so that the electrode assembly is accommodated inside the battery can, and the battery can may be electrically connected to the negative electrode plate of the electrode assembly. Accordingly, the battery can may have the same polarity as the negative electrode plate, that is, a negative electrode.

The diameter of the battery can is formed to be larger than the diameter of the electrode assembly. A gap of a preset size is formed between the battery can and the positive electrode current collector plate, and an insulator may be interposed between the gap.

If the size of the battery can is set according to the standard and then the size of the electrode assembly is increased, the total capacity of the battery cell 20 increases, but the gap between the battery can and the electrode assembly decreases.

That is, since increasing the size of the electrode assembly to increase the total capacity of the battery cell 20 reduces the gap between the battery can and the electrode assembly, the insulator should be able to be interposed between the reduced gap of the battery can and the electrode assembly to increase the capacity of the battery cell 20, and to this end, the thickness of the insulator is preferably as thin as possible.

The battery can is a roughly cylindrical container, which may be made of a conductive material such as metal, for example. The material of the battery can may be made of a conductive metal, such as aluminum, steel, stainless steel, or the like, but is not limited thereto.

A beading portion and a crimping portion may be formed in the battery can, and a cap plate to be described later may be seated and supported on the beading portion formed in the battery can. Additionally, the cap plate is fixed by the crimping portion. A sealing gasket may be interposed between the cap plate and the crimping portion of the battery can to secure airtightness of the battery can.

The beading portion is formed by pressing the outer circumference of the battery can inward. The beading portion supports the electrode assembly whose size roughly corresponds to the width of the battery can to prevent it from slipping out of the battery can, and may also function as a support for the cap plate to be seated. Additionally, the beading portion may support the outer circumferential surface of the sealing gasket.

The crimping portion is provided to extend and bend inward from the battery can to surround and fix the edge of the cap plate together with the sealing gasket. And, the crimping portion may be formed above or below the beading portion.

Additionally, the present disclosure includes a case where the battery can does not have at least one of the beading portion and the crimping portion. In this case, at least a portion of the edge of the negative electrode current collector plate may be directly welded to the inner surface of the battery can to support the electrode assembly.

The positive electrode current collector plate is electrically connected to the positive electrode plate, for example, at the top of the electrode assembly. For example, the positive electrode current collector plate is made of a conductive metal material and may be electrically connected to the first uncoated portion of the positive electrode plate.

The cell terminal is made of a conductive metal material and is electrically connected to the positive electrode current collector plate. And, the cell terminal is electrically connected to the positive electrode plate of the electrode assembly through the positive electrode current collector plate, thereby having a positive polarity.

That is, the cell terminal may function as a positive electrode terminal. And, the battery can is electrically connected to the negative electrode plate of the electrode assembly as described above, thereby having a negative polarity.

The negative electrode current collector plate is electrically connected to the negative electrode plate, for example, at the bottom of the electrode assembly. For example, the negative electrode current collector plate is made of a conductive metal material such as aluminum, steel, copper, nickel, or the like, and may be electrically connected to the second uncoated portion of the negative electrode plate.

The negative electrode current collector plate may be electrically connected to the battery can. To this end, at least a portion of the edge of the negative electrode current collector plate may be interposed and fixed between the inner surface of the battery can and the sealing gasket.

In one embodiment, at least a portion of the edge of the negative electrode current collector plate may be fixed to the beading portion by welding while being supported on the lower surface of the beading portion formed at the lower end of the battery can.

And, at least a portion of the remaining part except for the coupling part of the beading portion of the negative electrode current collector plate may be coupled to the bend surface of the second uncoated portion by welding, for example, laser welding.

Additionally, at least a portion of the edge of the negative electrode current collector plate may be electrically coupled to a surface adjacent to the crimping portion among the upper and lower surfaces of the beading portion.

The cap plate is configured to seal an opening formed at the lower end of the battery can. The cap plate may be made of, for example, a metal material to secure rigidity.

And, the cap plate may be separated from the electrode assembly and provided to be non-polar. That is, the cap plate may not have a polarity even when it is made of a conductive metal material.

When the cap plate has no polarity, it means that the cap plate is electrically insulated from the battery can and cell terminals. As such, the cap plate need not be polarized, and its material does not necessarily have to be a conductive metal.

The cap plate may be seated and supported on the beading portion formed in the battery can. Additionally, the cap plate is fixed by the crimping portion to be described later. The sealing gasket may be interposed between the cap plate and the crimping portion of the battery can to secure airtightness of the battery can. That is, the sealing gasket may be provided to be interposed between the edge of the cap plate and the opening of the battery can.

Referring to FIGS. 1 and 2, a current collector plate alignment apparatus 10 according to an embodiment of the present disclosure includes a seating member 100, an alignment member 200, and an operating member 300.

The seating member 100 is configured such that the current collector plate 400 is seated. The current collector plate 400 may have various shapes and for example, may be configured to include a main body 410 with a central hole 411 formed therein, and the main body 410 may be seated on the seating member 100.

Referring to FIG. 2, the seating member 100 may include a support portion 110 and an insertion portion 120.

The support portion 110 supports the main body 410 of the current collector plate 400. The support portion 110 may be configured in various ways, and for example, referring to FIG. 7, it may include a support 111 and a circumferential protrusion 112.

The support 111 may have various shapes, and for example, it may be formed in a cylindrical shape. However, the shape of the support 111 is not limited thereto. The support 111 supports the current collector plate 400.

The circumferential protrusion 112 protrudes from the circumference of the support 111. For example, when the support 111 has a cylindrical shape, the circumferential protrusion 112 may protrude upward along the circumference of the cylinder as shown in FIG. 7, and may be formed in a circular shape.

In this way, if the circumferential protrusion 112 may protrude upward along the circumference of the cylinder, when the current collector plate 400 is seated on the seating member 100 as shown in FIG. 2, the current collector plate 400 contacts only the circumferential protrusion 112 and does not contact the support 111. That is, the support portion 110 may be configured to include the support 111 and the circumferential protrusion 112, thereby minimizing the contact area between the current collector plate 400 and the support portion 110.

For example, if the contact area between the current collector plate 400 and the support portion 110 is increased, when the current collector plate 400 is aligned by the alignment member 200, the current collector plate 400 may be scratched against the support portion 110, resulting in plenty of scratches, which may damage the current collector plate 400.

However, in the case of the current collector plate alignment apparatus 10 according to an embodiment of the present disclosure, the support portion 110 includes a support 111 and a circumferential protrusion 112, and the circumferential protrusion 112 is configured to protrude from the circumference of the support 111, thereby minimizing the contact area between the current collector plate 400 and the support portion 110, so that there is an effect of preventing damage to the current collector plate due to scratches that may occur during the alignment of the current collector plate 400.

Referring to FIG. 7, the insertion portion 120 is coupled to the support 111 of the support portion 110, and the central hole 411 of the main body 410 of the current collector plate 400 is inserted (see FIG. 2). The insertion portion 120 may be formed to protrude from an approximate center of the support portion 110.

Referring to FIG. 7 again, the insertion portion 120 may include a first portion 121 and a second portion 122.

The first portion 121 extends from an approximate center of the support 111 of the support portion 110. However, the first portion 121 need not be positioned at the exact center of the support 111, and it may be positioned at the exact center of the support 111, or may be positioned slightly off the exact center of the support 111 within a preset range.

The second portion 122 extends obliquely upward from the first portion 121 as shown in FIG. 7. For example, the second portion 122 may extend pointedly from the first portion 121. In this way, when the second portion 122 extends pointedly from the first portion 121, the current collector plate 400 may be easily inserted into the insertion portion 120.

Referring to FIG. 7 again, the seating member 100 may include a detection sensor 130. That is, the detection sensor 130 may be installed at various positions on the seating member 100. For example, the detection sensor 130 may be installed on the support 111 to detect the seating of the current collector plate 400, but the installation position of the detection sensor 130 is not limited thereto.

The detection sensor 130 may include various sensors, for example, a proximity sensor, but is not limited thereto.

The current collector plate 400 may be seated on the seating member 100 in various ways. For example, a vacuum pad may suck the current collector plate 400 stored in the tray and then seat it on the seating member 100. At this time, the vacuum pad releases suction while the central hole 411 of the main body 410 of the current collector plate 400 is inserted into the insertion portion 120 of the seating member 100, and accordingly, the current collector plate 400 may be supported by the support portion 110 after being inserted into the insertion portion 120.

However, the current collector plates 400 stored in the tray are not all accurately aligned, and thus, when the vacuum pad sucks the current collector plate 400 and then seats it on the seating member 100, the current collector plate 400 is seated on the seating member 100 without being aligned. In this way, to align the current collector plate 400 seated on the seating member 100 without being aligned, the current collector plate alignment apparatus 10 according to an embodiment of the present disclosure includes an alignment member 200.

The alignment member 200 moves toward the current collector plate 400 to align the current collector plate 400. The alignment member 200 may be configured in various ways, and for example, as shown in FIG. 2, may include a pair of alignment guides 210 disposed at each of both sides of the seating member 100.

Referring to FIGS. 3 and 4, when the current collector plate 400 is seated on the seating member 100 by the vacuum pad, the pair of alignment guides 210 are spaced apart from the current collector plate 400. And, referring to FIGS. 5 and 6, after the current collector plate 400 is seated on the seating member 100, the pair of alignment guides 210 each move toward the current collector plate 400 to press each of both sides of the current collector plate 400.

Here, when the current collector plate 400 is not aligned and the arrangement is crooked, the current collector plate 400 may be aligned by the pair of alignment guides 210. That is, the pair of alignment guides 210 align the current collector plate 400 by pressing the current collector plate 400 from both sides of the current collector plate 400.

Referring to FIG. 9, a pair of alignment guides 210 may be coupled to a driving unit 220. The driving unit 220 is coupled to the pair of alignment guides 210 and moves the pair of alignment guides 210 toward the current collector plate 400. The driving unit 220 may be various, and may include, for example, a cylinder or various motors, but is not limited thereto.

A linear movement guide 230 is coupled to the pair of alignment guides 210 and guides the movement of the pair of alignment guides 210 so that the pair of alignment guides 210 may move linearly toward the current collector plate 400.

Referring to FIGS. 1 and 8, the operating member 300 operates the seating member 100 and the alignment member 200.

The operating member 300 operates the seating member 100 and the alignment member 200 to move the current collector plate 400 aligned with the alignment member 200 to the transfer carrier 500. The operating member 300 may be various, and may include, for example, various motors.

Referring to FIG. 8, the operating member 300 may include a rotation unit 310 and a power unit 320. The rotation unit 310 is coupled to the alignment member 200 to rotate the alignment member 200. And, the power unit 320 is coupled to the rotation unit 310 to rotate the rotation unit 310. The power unit 320 may include various motors and may include, for example, a servo motor capable of angle control.

Referring to FIG. 10, the transfer carrier 500 may be positioned below the alignment member 200, and the operating member 300 may rotate the alignment member 200 to allow the alignment member 200 to be positioned to correspond to the transfer carrier 500.

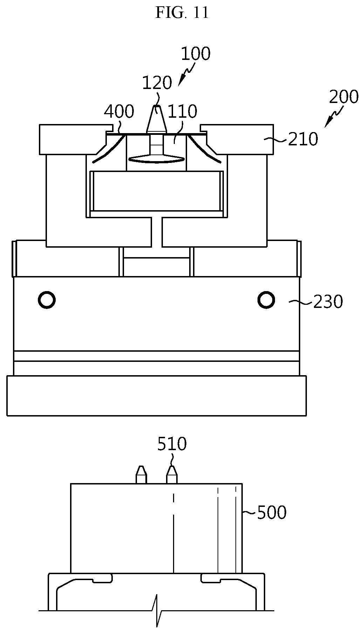

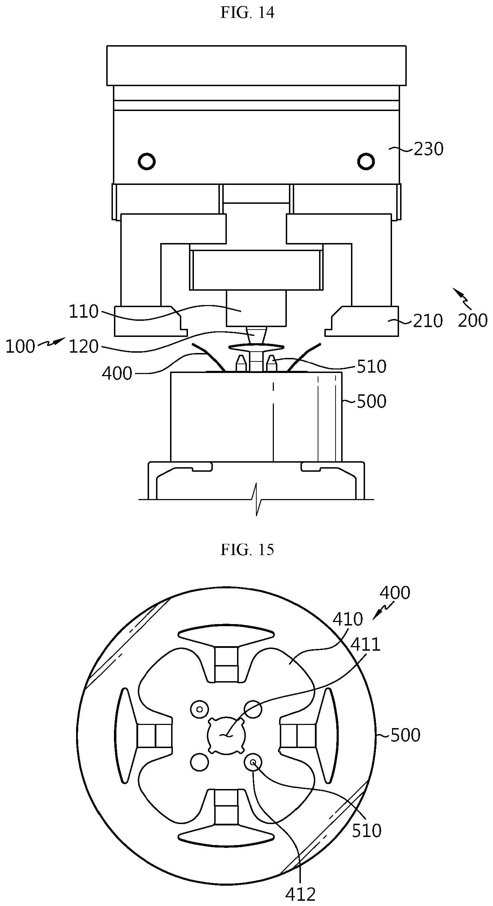

FIGS. 11 to 14 are views illustrating a process of moving a current collector plate to a transfer carrier after the current collector plate is aligned by a current collector plate alignment apparatus according to an embodiment of the present disclosure, and FIG. 15 is a plan view showing a current collector plate after being moved to a transfer carrier by a current collector plate alignment apparatus according to an embodiment of the present disclosure.

Hereinafter, with reference to FIGS. 11 to 15, a process of moving a current collector plate 400 to a transfer carrier 500 after the current collector plate 400 is aligned by the operation of the operating member 300 will be described.

Referring to FIG. 11, the current collector plate 400 is aligned by the alignment member 200 after being seated on the seating member 100. Here, the pair of alignment guides 210 of the alignment member 200 press each of both sides of the current collector plate 400 to align the current collector plate 400, and also support and fix the current collector plate 400.

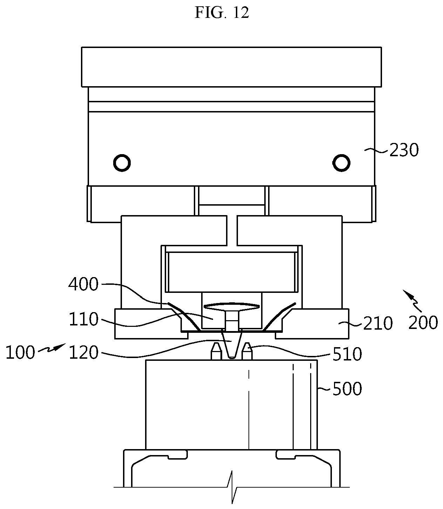

Referring to FIG. 12, the alignment member 200 rotates by the operation of the operating member 300. That is, when the power unit 320 (see FIG. 8) of the operating member 300 rotates (e.g., rotates 180 degrees), the rotation unit 310 coupled to the power unit 320 rotates, and the alignment member 200 coupled to the rotation unit 310 also rotates.

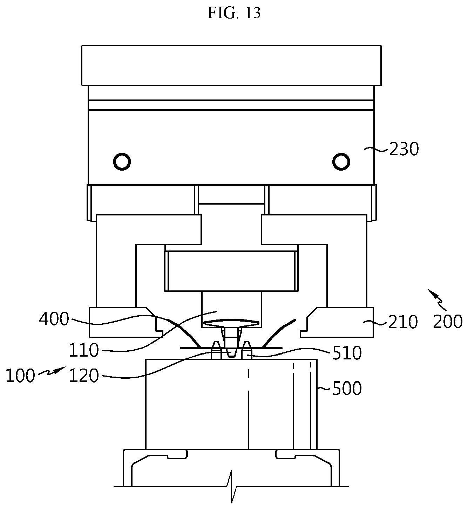

Referring to FIG. 13, when the alignment member 200 rotates and is positioned to correspond to the transfer carrier 500, the pair of alignment guides 210 release the pressure on the current collector plate 400. Accordingly, the current collector plate 400 descends to the transfer carrier 500.

Referring to FIGS. 14 and 15, the current collector plate 400 descends and is seated on the transfer carrier 500. Here, an alignment hole 412 may be formed in the current collector plate 400, and an alignment protrusion 510 may be formed in the transfer carrier 500, and as the current collector plate 400 descends, the alignment hole 412 of the current collector plate 400 may be inserted into the alignment protrusion 510 of the transfer carrier 500.

Accordingly, there is an effect of allowing the aligned current collector plate 400 to be accurately seated on the transfer carrier 500.

And, once the current collector plate 400 is aligned and then seated on the transfer carrier 500, the transfer carrier 500 transfers the current collector plate 400 to the manufacturing apparatus of the battery cell 20.

As described above, the current collector plate alignment apparatus 10 according to each embodiment of the present disclosure has the effect of automating the transfer of the current collector plate 400 from the tray to the transfer carrier 500, and also has the effect of improving the product quality of the battery cell 20.

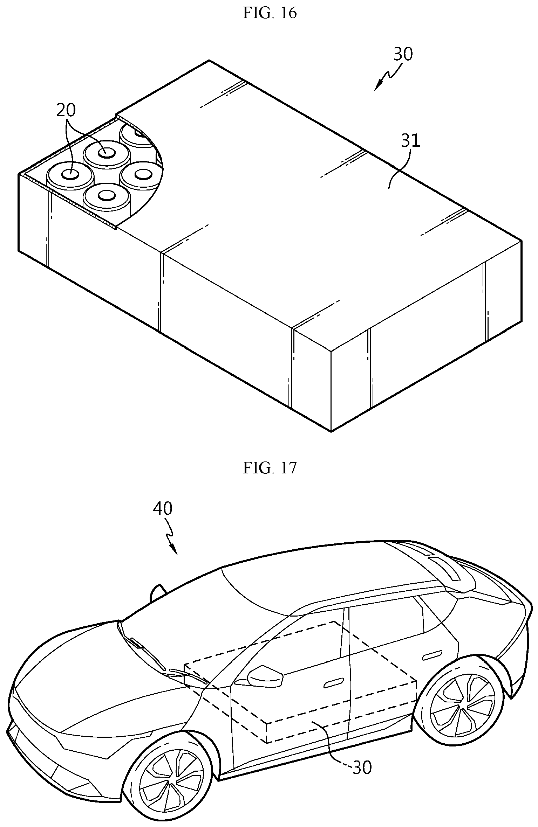

FIG. 16 is a view schematically showing the configuration of a battery pack including battery cells produced using a current collector plate alignment apparatus according to each embodiment of the present disclosure.

Referring to FIG. 16, a battery pack 30 according to an embodiment of the present disclosure may include one or more battery cells 20. Here, the battery cell 20 includes the current collector plates 400 aligned using the current collector plate alignment apparatus 10 according to each embodiment of the present disclosure as described above.

Additionally, the battery pack 30 may further include a pack housing 31 for accommodating the battery cell 20, and various devices for controlling the charging and discharging of the battery cell 20, such as a BMS, a current sensor, a fuse, and the like.

FIG. 17 is a view for describing a vehicle including a battery pack of FIG. 16.

Referring to FIG. 17, a vehicle 40 according to an embodiment of the present disclosure may include one or more battery cells 20 or battery packs 30. The battery cell 20 includes the current collector plates 400 aligned using the current collector plate alignment apparatus 10 according to each embodiment of the present disclosure as described above. And, the battery pack 30 may include one or more battery cells 20 as described above.

Here, the vehicle 40 includes various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those having ordinary skill in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a current collector plate alignment apparatus and a battery cell produced using the same, and a battery pack and a vehicle including the battery cell, and is particularly applicable to industries related to secondary batteries.

## Claims

1. A current collector plate alignment apparatus, which is an apparatus for aligning a current collector plate provided in a battery cell, the current collector plate alignment apparatus comprising:
a seating member on which the current collector plate is seated;
an alignment member that moves toward the current collector plate to align the current collector plate; and
an operating member that operates the seating member and the alignment member.

2. The current collector plate alignment apparatus according to claim 1,
wherein the current collector plate comprises a main body with a central hole formed therein, and
wherein the seating member comprises:
a support portion that supports the main body; and
an insertion portion that is coupled to the support portion and into which the central hole of the main body is inserted.

3. The current collector plate alignment apparatus according to claim 2,
wherein the support portion comprises:
a support that supports the current collector plate; and
a circumferential protrusion that protrudes from a circumference of the support.

4. The current collector plate alignment apparatus according to claim 2,
wherein the insertion portion comprises:
a first portion extending from the support portion; and
a second portion extending obliquely upward from the first portion.

5. The current collector plate alignment apparatus according to claim 1,
wherein the alignment member comprises a pair of alignment guides disposed at each of both sides of the seating member.

6. The current collector plate alignment apparatus according to claim 5, comprising:
a driving unit that is coupled to the pair of alignment guides and moves the pair of alignment guides toward the current collector plate side.

7. The current collector plate alignment apparatus according to claim 6,
wherein the pair of alignment guides align the current collector plate by pressing the current collector plate from both sides of the current collector plate.

8. The current collector plate alignment apparatus according to claim 5, comprising:
a linear movement guide coupled to the pair of alignment guides to allow the pair of alignment guides to move linearly toward the current collector plate.

9. The current collector plate alignment apparatus according to claim 1,
wherein the operating member operates the seating member and the alignment member to move the current collector plate aligned with the alignment member to a transfer carrier.

10. The current collector plate alignment apparatus according to claim 9,
wherein the operating member comprises:
a rotation unit coupled to the alignment member to rotate the alignment member; and
a power unit coupled to the rotation unit to rotate the rotation unit.

11. The current collector plate alignment apparatus according to claim 9,
wherein the transfer carrier is positioned below the alignment member, and the operating member rotates the alignment member to allow the alignment member to be positioned to correspond to the transfer carrier.

12. The current collector plate alignment apparatus according to claim 11,
wherein the alignment member comprises a pair of alignment guides disposed at each of both sides of the seating member to press each of both sides of the current collector plate, and
wherein when the alignment member is positioned to correspond to the transfer carrier, the pair of alignment guides release the pressure on the current collector plate, thereby allowing the current collector plate to descend onto the transfer carrier.

13. The current collector plate alignment apparatus according to claim 12,
wherein an alignment hole is formed in the current collector plate, and an alignment protrusion is formed in the transfer carrier, and
wherein as the current collector plate descends, the alignment hole of the current collector plate is inserted into the alignment protrusion of the transfer carrier.

14. The current collector plate alignment apparatus according to claim 1, comprising:
a detection sensor installed on the seating member to detect the seating of the current collector plate.

15. A battery cell produced using a current collector plate alignment apparatus according to any one of claims 1 to 14.

16. A battery pack comprising at least one battery cell according to claim 15.

17. A vehicle comprising at least one battery cell according to claim 15.
